# EUROPÄISCHE PATENTSCHRIFT

(11) **EP 1 426 110 B1**
(45) Veröffentlichungstag und Bekanntmachung des Hinweises auf die Patenterteilung: **31.12.2014**
(21) Anmeldenummer: 04005263.1
(22) Anmeldetag: 07.11.1997
(51) Int. Cl.: B01L 7/00, B01L 3/00, C12Q 1/68, G05D 23/19

(54) **Laborthermostat, aufweisend einen Temperierblock mit Temperiereinrichtungen, und Verfahren zu dessen Verwendung**
Temperature-regulating block with temperature-regulating devices and method of using the same
Bloc de régulation de température doté de dispositifs de régulation de température et procédé d'utilisation

(30) Priorität: 08.11.1996 DE 19646115
(43) Veröffentlichungstag der Anmeldung: 09.06.2004
(62) Teilanmeldung aus: 97948904.4
(73) Patentinhaber: EPPENDORF AG, 22339 Hamburg (DE)
(72) Erfinder: Lurz, Werner, Dr., 24568 Kaltenkirchen (DE); Jodies, Dietmar, 25479 Ellerau (DE); Brust, Rüdiger, Dr., 23911 Ziethen (DE); Tennstedt, Ernst, 22399 Hamburg (DE)
(74) Vertreter: Ricker, Mathias

(56) Entgegenhaltungen:
- EP-A- 0 711 603
- WO-A-92/04979
- US-A- 3 556 731
- US-A- 3 985 508
- US-A- 5 061 630
- US-A- 5 154 889
- US-A- 5 224 536
- US-A- 5 525 300

## Beschreibung

Die Erfindung betrifft einen Laborthermostat mit einem Temperierblock der im Oberbegriff des Anspruchs 1 genannten Art und ein Verfahren zu dessen Verwendung.

Ein solcher Temperierblock ist aus der US-PS 5,525,300 bekannt. Zwei an gegenüberliegenden Enden des Temperierblockes in Wärmekontakt angreifende Temperiereinrichtungen heizen den Temperierblock vom einen Ende her und kühlen ihn vom anderen Ende her. Es fließt ein Wärmestrom in Längsrichtung zwischen den Temperiereinrichtungen durch den Temperierblock und es entsteht ein Temperaturprofil in Längsrichtung über den Temperierblock, das zu unterschiedlichen Temperaturen führt. Mit einem solchen, einen Temperaturgradienten erzeugenden Temperierblock kann z.B. beim PCR-Prozeß die optimale Temperatur für eine Temperaturstufe des PCR-Prozesses ermittelt werden.

Nachteilig bei der bekannten Konstruktion ist die Temperierung des Temperierblockes nur von seinen Enden her. Beim Einschalten des Gerätes oder bei einer Veränderung des im Temperierblock einzustellenden Temperaturniveaus ergeben sich aufgrund der Temperierung von den Enden her längere Temperierzeiten, bis das gewünschte Gleichgewicht eingestellt ist. Ferner kann im mittleren Bereich des Temperierblockes durch Umgebungseinflüsse die Temperatur vom gewünschten Temperaturprofil abweichen.

Die Aufgabe der vorliegenden Erfindung besteht daher darin, einen Laborthermosthaten mit einem Temperierblock der gattungsgemäßen Art und ein Verfahren zu dessen Verwendung zu schaffen, bei dem das gewünschte Temperaturprofil schneller und störungsfreier einstellbar ist.

Diese Aufgabe wird erfindungsgemäß mit den Merkmalen des Kennzeichnungsteiles des Anspruchs 1 gelöst. Ein Verfahren zur Verwendung dieses Laborthermostaten gibt Anspruch 13 an.

Erfindungsgemäß sind die mehreren am Temperierblock angreifenden Temperiereinrichtungen großflächig mit aneinandergrenzenden Feldern der Kontaktierseite kontaktiert. Überraschend zeigt sich bei dieser Konstruktion, daß trotz des großflächigen Kontaktes mit Temperiereinrichtungen, die dem Temperierblock gleichmäßig Wärme zuführen oder aus diesem Wärme abführen, auch über die Temperiereinrichtungen hinweg ein Temperaturgradient eingestellt werden kann. Die bekannte endständige Anordnung der Temperiereinrichtung ist hierzu nicht notwendig. Es ergibt sich der Vorteil einer direkten Temperaturbeeinflussung des Temperierblockes über seine ganze Fläche. Umgebungseinflüsse, z.B. durch die umgebende Luft, werden weitgehend ausgeschaltet. Durch den großflächigen Eingriff über die gesamte Fläche des Temperierblockes sind auch die Zeiten zur Einstellung des gewünschten Temperaturprofiles wesentlich geringer, wenn beispielsweise der Temperierblock von einem Temperaturprofil im Bereich 40° auf ein Temperaturprofil im Bereich 90° umgeschaltet werden soll. Es ist also ohne weiteres möglich Proben in einem Temperierblock rasch nacheinander auf unterschiedliche Temperaturniveaus zu bringen, entweder mit einem Temperaturgradienten oder auch mit über den gesamten Block gleichmäßiger Temperatur.

Die großflächige Kontaktierung mit Temperatureinrichtungen läßt sich in einer alternativen Betriebsart sehr einfach zur gleichmäßigen Temperierung aller Aufnahmen verwenden. Es ist dazu nicht erforderlich, wie bei der eingangs genannten Konstruktion, zusätzlich zu den heizenden und kühlenden endständig angeordneten Temperiereinrichtungen eine zusätzliche, auf der Kontaktierseite angeordnete Temperiereinrichtung vorzusehen.

Vorteilhaft sind die Merkmale des Anspruches 2 vorgesehen. Hierdurch läßt sich der Wärmestrom, der im Temperierblock zwischen benachbarten Temperiereinrichtungen fließt, reduzieren. Durch diesen Wärmestrom bedingte Beeinflussungen zwischen den die Temperiereinrichtungen steuernden Regeleinrichtungen, die zu Regelschwingungen führen können, werden dadurch verringert, so daß sich der elektronische Regelaufwand vereinfachen läßt.

Das Temperaturprofil über dem Temperierblock, also der jeweilige Temperaturgradient, entspricht nicht immer dem angestrebten Temperaturprofil. Abweichungen entstehen insbesondere an den Enden des Temperierblockes, in dem der Einfluß benachbarter Temperiereinrichtungen abnimmt und somit der Temperaturgradient abflacht. Vorteilhaft sind daher die Merkmale des Anspruches 4 vorgesehen. Mit solchen Abschnitten anderen Wärmeleitwiderstandes läßt sich die Temperaturkurve korrigieren. Insbesondere läßt sich durch Erhöhung des Wärmeleitwiderstandes ein höherer Temperaturgradient erzielen, so daß die Abflachungen an den Enden der Temperaturkurve korrigiert werden können.

Vorteilhaft sind dabei gemäß Anspruch 5 die Abschnitte von der Mitte des Temperierblockes zu seinem Rand hin mit wachsenden Wärmeleitwiderständen ausgebildet. Damit läßt sich das erzeugte Temperaturprofil linearisieren.

Vorteilhaft sind dabei die Abschnitte gemäß Anspruch 6 als Nuten ausgebildet, die durch einfache Schwächung des Querschnittes einen erhöhten Wärmeleitwiderstand ergeben. Gegenüber den zu diesem Zweck aus der einfangs genannten gattungsgemäßen Konstruktion bekannten Querbohrungen ergibt sich der Vorteil einfacherer Herstellbarkeit und günstigerer Anordnung zwischen als Vertiefungen ausgebildeten Aufnahmen.

Vorteilhaft sind die Merkmale des Anspruches 7 vorgesehen. In der Fläche verteilt angeordnete Temperiereinrichtungen können auf unterschiedliche Weise betrieben werden. Es können seitlich benachbarte Temperiereinrichtungen gleich temperierend betrieben werden, so daß der Temperierblock in Längsrichtung oder Querrichtung einen Temperaturgradienten aufweist. Beispielsweise kann in einem Temperierblock nacheinander bei unterschiedlichen Temperaturniveaus in unterschiedlichen Richtungen ein Gradient eingestellt werden. Die Temperiereinrichtungen können auch alle unterschiedlich betrieben werden, so daß ein Temperaturgradient sowohl in x-Richtung als auch in y-Richtung eingestellt wird, z. B. mit unterschiedlichen Temperaturgradienten in den beiden Richtungen.

Vorteilhaft sind die Merkmale vorgesehen, daß an der Aufnahmeseite zwei Arten von Aufnahmen (71, 72) für unterschiedliche Gefäße in einem regelmäßigen Flächengitter derart angeordnet sind, daß eine Aufnahme einer Art jeweils zwischen vier Aufnahmen der anderen Art liegt.. Hierdurch ist es möglich, zwei unterschiedliche im Laborbetrieb vorkommende Behälterarten ohne Umrüsten des Laborthermostaten verwenden zu können. Auch eine gemischte Bestückung ist möglich. Die große Zahl eng benachbart angeordneter, als Vertiefungen ausgebildeter Aufnahmen verringert die Masse des Temperierblockes. Dadurch verringert sich die Wärmekapazität des Temperierblockes so das dieser schneller auf gewünschte Temperaturen gebracht werden kann. Es gelingt auch, den Temperierblock zu seiner Aufnahmeseite hin derart zu schwächen, daß der Wärmestrom zwischen den Temperiereinrichtungen bevorzugt durch einen der Kontaktierseite benachbarten Plattenbereich des Temperierblockes fließt, wodurch eine sehr genaue und gleichmäßige Einstellung der gewünschten Temperaturen möglich ist. Dabei sind vorteilhaft die Aufnahmen der einen Art einer vorgegebenen Gitteranordnung von Gefäßen angepaßt. Dadurch können auch Gefäße verwendet werden, die z.B. in einer durchgehenden Plattenanordnung integriert sind. Die erwünschte Schwächung des zur Aufnahmeseite hin liegenden oberen Teiles des Temperierblockes kann durch zusätzliche Löcher zwischen den Aufnahmen verbessert werden. Eine durchgehende Platte des Temperierblockes, die unterhalb der Vertiefungen und Löcher durchgehend verläuft, erhöht die Gleichmäßigkeit der Temperatureinstellung. Abschnitte erhöhten Wärmeleitwiderstandes des Temperierblockes, wie sie in der eingangs genannten gattungsgemäßen Konstruktion in Form von Bohrungen vorgesehen sind, können zur Korrektur des gewünschten Temperaturprofiles verwendet werden. Vorteilhaft sind solche Abschnitte als Nuten z. B. von der Kontaktierseite her vorgesehen, die z. B. mäanderförmig zwischen den Vertiefungen und Löchern verlaufen.

Vorteilhaft sind die Merkmale vorgesehen, daß der Temperierblock (8) mit wenigstens einem anderen Temperierblock (7, 9, 9') gegenüber einem die Behälter (1) tragenden Halter (5) bewegbar und abwechselnd in fluchtende Lage seiner Aufnahmen (11) zu den Behältern (1) bringbar ist. Dadurch werden wie bei der eingangs genannten bekannten Konstruktion möglich, die Behälter nacheinander mit verschiedenen, unterschiedlich temperierten Temperierblöcken in Eingriff gebracht, die entweder einen Temperaturgradienten oder auch eine über ihre Fläche konstante Temperatur aufweisen. Die Temperierblöcke können zur Seitenbewegung in einem seitlich verschiebbaren Schlitten angeordnet sein. Sie können zu diesem Zweck auch in einem Rotor angeordnet sein, der beispielsweise karusselartig in einer Ebene parallel zum Halter dreht. Vorzugsweise werden sie mit einem Rotor um eine parallel zum Halter liegende Achse gedreht, was eine besonders raumsparende Anordnung ermöglicht. Dabei können die Blöcke zur Abstandsbewegung gegenüber dem Rotor bewegt werden oder vorzugsweise wird der Rotor zur Abstandsbewegung als Ganzes bewegt.

In den Zeichnungen ist die Erfindung beispielsweise und schematisch dargestellt. Es zeigen:
- Fig. 1:: einen Schnitt durch einen erfindungsgemäßen Laborthermostaten mit einem Blockwechselantrieb in einer erster Ausführungsform,
- Fig. 2:: einen Schnitt durch einen erfindungsgemäßen Laborthermostaten mit einem Blockwechselantrieb in einer zweiten Ausführungsform,
- Fig. 3:: einen Temperierblock zur Erzeugung eines Temperaturgradienten in einer ersten Ausführungsform,
- Fig. 3a:: den zu dem in Fig. 3 dargestellten Block gehörigen Temperaturgradienten,
- Fig. 4:: einen Temperierblock zur Erzeugung eines Temperaturgradienten in einer zweiten Ausführungsform,
- Fig. 4a:: den zu dem in Fig. 4 dargestellten Block gehörigen Temperaturgradienten,
- Fig. 5:: einen Temperierblock in Ansicht von der Kontaktierseite her mit vier in Quadrantenanordnung vorgesehenen Temperiereinrichtungen.
- Fig. 6:: eine Draufsicht auf einen Temperierblock entsprechend dem der Fig. 4 mit Detaildarstellung der Aufnahmen und
- Fig. 7:: einen Schnitt nach Linie 7 - 7 in Fig. 6.

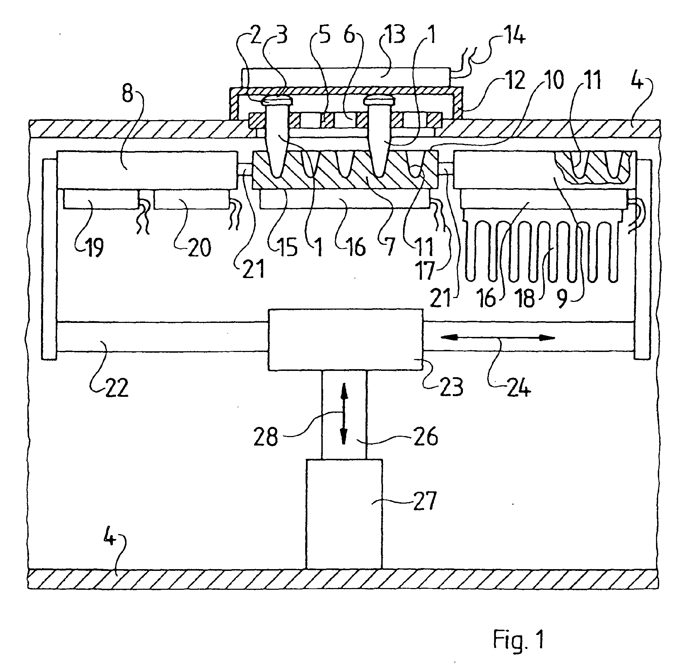

Fig.1 zeigt einen Laborthermostaten, der insbesondere für den PCR-Prozeß geeignet ist. Probeflüssigkeiten z. B. Reaktionsgemische sollen nacheinander auf unterschiedliche Temperaturen gebracht werden.

Dazu sind die Probeflüssigkeiten in Behältern 1 vorgesehen, die im dargestellten Ausführungsbeispiel als handelsübliche Reaktionsgefäße aus dünnwandigem Plastikmaterial ausgebildet sind. Sie weisen einen zylindrischen Bereich auf, der, wie Fig. 1 zeigt, in seinem unteren, die Probeflüssigkeit aufnehmenden Endbereich, sich konisch verjüngt. Der obere Rand weist einen Kragen 2 auf und einen den Behälter 1 verschließenden, elastisch verformbaren Deckel 3.

Der dargestellte Laborthermostat weist ein umschließendes Gehäuse 4 auf, in dessen Oberseite ein als Lochplatte ausgebildeter Halter 5 angeordnet ist, mit Löchern 6, die die Behälter 1 in Postition halten und an ihren Kragen 2 gegen Herausfallen nach unten sichern.

Unter dem Halter 5 ist ein Temperierblock 7 angeordnet, der an seiner oberen Aufnahmeseite 10 Aufnahmen 11 in Form von Vertiefungen aufweist, welche in ihrer Formgebung der Formgebung der unteren Endbereiche der Behälter 1 entsprechen. Die Anordnung der Aufnahmen 11 in der Fläche der Aufnahmeseite 10 des Blockes 7 entspricht der Anordnung der Löcher 6 im Halter 5. In der dargestellten Stellung des Temperierblockes 7 unter dem Halter 5., bei der die Aufnahmen 11 zu den Löchern 6 fluchten, gelangen alle im Halter 5 befindlichen Behälter 1 mit ihren unteren Endbereichen durch ihren Eingriff mit den Aufnahmen 11 in flächigen Kontakt mit dem Block 7.

Zur Sicherung des gut wärmeleitenden Flächenkontaktes der Behälter 1 mit den Aufnahmen 11 des Blockes 7 ist über dem Halter 5 eine diese abdeckende Dekkelplatte 12 angeordnet, die auf die elastischen Deckel 3 der Behälter 1 drückt. Zu Zwecken der sicheren Temperierung der Probeflüssigkeiten in den Behältern 1 und zum Vermeiden von Kondensation an den Deckeln 3 der Behälter ist die Deckelplatte 12 mit einer ihr anliegenden Temperiereinrichtung 13, beispielsweise einem Peltierelement mit Anschlußleitern 14 auf geeignete Temperatur gebracht.

Der Block 7 steht an seiner der Aufnahmeseite 10 gegenüberliegenden Kontaktierseite 15 in Kontakt mit einer Temperiereinrichtung 16. Diese kann beispielsweise als Peltierelement ausgebildet sein, das über Anschlußleitungen 17 mit Strom versorgt wird. Ein Peltierelement ist für diese Zwecke besonders geeignet, da es je nach Erfordernis zum Heizen oder Kühlen einsetzbar ist.

Mit der Temperiereinrichtung 16 kann der Block 7 auf eine gewünschte Temperatur gebracht werden. Vorzugsweise ist zu diesem Zweck in dem Block 7 an geeigneter Stelle ein Temperatursensor vorgesehen, der über eine elektronische Regeleinrichtung die Temperiereinrichtung 16 derart steuert, daß die Temperatur im Block 7 auf geeigneter Höhe konstant gehalten wird.

Gelangt der Block 7, wie dargestellt, in flächigen Kontakt der Behälter 1 mit den Vertiefungen 11, so nimmt die Probeflüssigkeit in den Behältern sehr schnell und hochgenau die Temperatur des Blockes 7, also die gewünschte Reaktionstemperatur an.

Im dargestellten Ausführungsbeispiel weist der Laborthermostat zwei weitere Blöcke 8 und 9 auf, die in ihrer Ausbildung mit den als Vertiefungen vorgesehenen Aufnahmen 11 dem bereits erwähnten Block 7 entsprechen. Die Temperierblöcke 8 und 9 sind ebenfalls mit Temperiereinrichtungen versehen, und zwar im Falle des Blockes 9 mit einer Temperiereinrichtung 16 und im Falle des Temperierblockes 8 mit zwei nebeneinander angeordneten Temperiereinrichtungen 19 und 20, die parallel mit gleicher Temperatur betrieben werden können oder auch, wie noch näher zu erläutern ist, mit unterschiedlicher Temperatur. Die Temperiereinrichtung 16 unter dem Temperierblock 9 ist mit einem Kühlkörper 18 versehen, der auch bei den anderen Temperiereinrichtungen vorgesehen sein kann und der dann von Vorteil ist, wenn die Temperiereinrichtung als Peltierelement ausgebildet ist, das auf seiner vom Temperierblock abgewandten Fläche Wärme abgeben oder aufnehmen muß.

Die Anordnung der Vertiefungen 11 in allen drei Blöcken 7, 8 und 9 ist identisch. Die Blöcke können also wahlweise in Eingriff mit den Behältern 1 im Halter 5 gebracht werden.

Dazu ist ein Blockwechselantrieb vorgesehen. Die Blöcke 7, 8 und 9 sind untereinander mit Stützen 21 starr in einer Ebene zu einer seitlich verschiebbaren Schlittenkontrukstruktion verbunden, die mit einer Schiebestange 22 in einer Schiebeführung 23 in Richtung des Pfeiles 24 längsverschiebbar gelagert ist. Der auf diese Weise gebildete Seitenantrieb für die Temperierblöcke 7, 8 und 9 ist als Ganzes mit einem Abstandsantrieb höhenverstellbar.

Für den Abstandsantrieb ist die Schiebeführung 23 auf einer Schiebestange 26 befestigt, die in einer Schiebeführung 27 in Richtung des Pfeiles 28 höhenverschiebbar gelagert ist.

Aus der in Figur 1 dargestellten Position der Temperierblöcke mit Eingriff des mittleren Temperierblockes 7 mit den Behälter 1 kann durch Absenken in der Schiebeführung 27 der Block 7 außer Eingriff mit den Behältern gebracht werden. Durch Verstellung der Schiebestange 22 des Seitenantriebes kann nun einer der beiden anderen Blöcke in fluchtende Stellung unter den Halter 5 gebracht werden und nach Aufwärtsverschiebung in der Schiebeführung 27 in Eingriff mit den Behältern 1 gebracht werden.

Auf diese Weise können die im Halter 5 sitzenden Behälter 1 abwechselnd in Wärmekontakt mit den Temperierblöcken 7, 8 oder 9 gebracht werden. Diese können auf unterschiedlichen Temperaturen thermostatisiert gehalten werden. Die Behälter 1 können also in rascher Folge auf unterschiedliche hochgenaue Temperaturen gebracht werden, was insbesondere für PCR-Zwecke gewünscht ist.

Die Aufnahmen 11 in den Temperierblöcken 7, 8 und 9 können, ebenso wie die Löcher 6 im Halter 5, in geeigneter Weise angeordnet werden, beispielsweise in Form von Reihen und Spalten. Nach Abnehmen der Deckelplatte 12 können die Behälter ausgewechselt werden. Sie können beispielsweise auf arbeitssparende Weise zusammen mit dem Halter 5 gemeinsam gewechselt werden, der zu diesem Zweck auswechselbar am Gehäuse 4 vorzusehen ist.

Anstelle der dargestellten drei Temperierblöcke 7, 8 und 9 können in der dargestellten linearen Schlittenanordnung je nach gewünschter Anzahl von Temperaturstufen die Blöcke auch in anderer Anzahl vorgesehen sein.

Es kann auch die Anordnung von Seitenantrieb und Abstandsantrieb anders ausgebildet sein. Beispielsweise können die Blöcke über einzelne Abstandsantriebe mit einem Seitenantrieb verbunden sein.

Der Antrieb der Blöcke zum Zwecke ihres Auswechselns unter den Behältern 1 kann von Hand erfolgen oder vorzugsweise mittels Motorantrieben, die beispielsweise computergesteuert auf nicht dargestellte Weise den Antrieb der Schiebestange 22 gegenüber ihrer Schiebeführung 23 und den Antrieb der Schiebestange 26 gegenüber ihrer Schiebeführung 27 besorgen. Auf diese Weise kann ein Thermostatisierungszyklus mit gewünschtem Ablauf programmgesteuert erfolgen.

Anstelle des in Figur 1 dargestellten Blockantriebes, bei dem der Seitenantrieb als Schiebeschlitten mit der Schiebeführung 22, 23 ausgebildet ist, kann der Seitenantrieb auch beispielsweise als Karusselantrieb ausgebildet sein. Dabei wären die dargestellten Blöcke 7, 8 und 9 in einer Ebene parallel zum Halter 5 um eine dazu senkrecht liegende Rotationsachse schwenkbar anzuordnen.

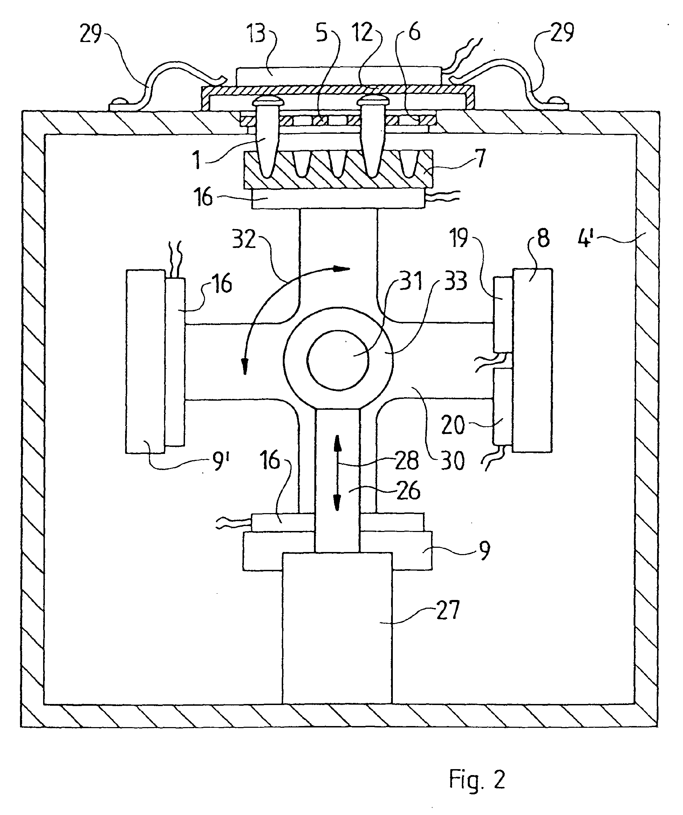

Eine weitere vorteilhafte Ausführungsform des Blockwechselantriebes ist in Figur 2 dargestellt. Teile der Konstruktion entsprechen der der Figur 1. Für übereinstimmende Teile sind, soweit möglich, dieselben Bezugszeichen verwendet.

In der Oberseite eines etwas anders geformten Gehäuses 4' ist der Halter 5 zum Halten von Gefäßen 1 vorgesehen. Es wird wiederum mit einer Deckelplatte 12 abgedeckt, die für Andruck und Temperierung der Gefäße von oben sorgt. Zusätzlich zeigt die Figur 2 lösbare Verriegelungen 29, die auch in Fig. 1 vorgesehen sein können und die die Deckelplatte 12 in der dargestellten Lage sichern.

In der Ausführungsform der Fig. 2 weist der Laborthermostat die drei Temperierblöcke 7, 8 und 9 der Figur 1 auf und zusätzlich einen Temperierblock 9', der entsprechend ausgebildet ist. Diese Temperierblöcke entsprechen der Ausführungsform der Fig. 1 einschließlich der zugehörigen Temperiereinrichtungen. Der Temperierblock 7 steht in seiner dargestellten Stellung in Eingriff mit den Gefäßen 1 fluchtend unter dem Halter 5.

Im wesentlichen Unterschied zur Ausführungsform der Figur 1 ist die Bewegungseinrichtungen für die Seitenbewegung der Temperierblöcke anders ausgebildet.

Die Blöcke 7, 8, 9 und 9' sind in 90°-Stellung an einem Rotor 30 befestigt, der um eine Achse 31 in Richtung des Pfeiles 32 rotierbar im Kopf 33 der Schiebestange 26 gehalten ist, die gemäß Fig. 1 in Richtung des Pfeiles 28 in der Schiebeführung 27 längsverschiebbar ist.

Zum Wechseln der Temperierblöcke unter dem Halter 5 wird zunächst die Schiebestange 26 mit dem Rotor 30 nach unten gefahren, bis der gerade im Eingriff befindliche Temperierblock außer Eingriff mit den Gefäßen 1 kommt. Sodann wird der Rotor 30 um ein Vielfaches von 90° gedreht, um einen anderen Temperierblock in die Flucht unter dem Halter 5 zu bringen und durch Anheben der Schiebestange 26 in Kontakt mit den Gefäßen 1 zu bringen. Auch hier können wieder nicht dargestellte motorische Antriebe vorgesehen sein, die z.B. von einer Computersteuerung zu vollautomatischem Ablauf gesteuert werden.

Wie der Vergleich der Figuren 1 und 2 zeigt, ist die Ausführungsform der Fig. 2 mit rotierendem Antrieb der Temperierblöcke von kompakterer Bauweise.

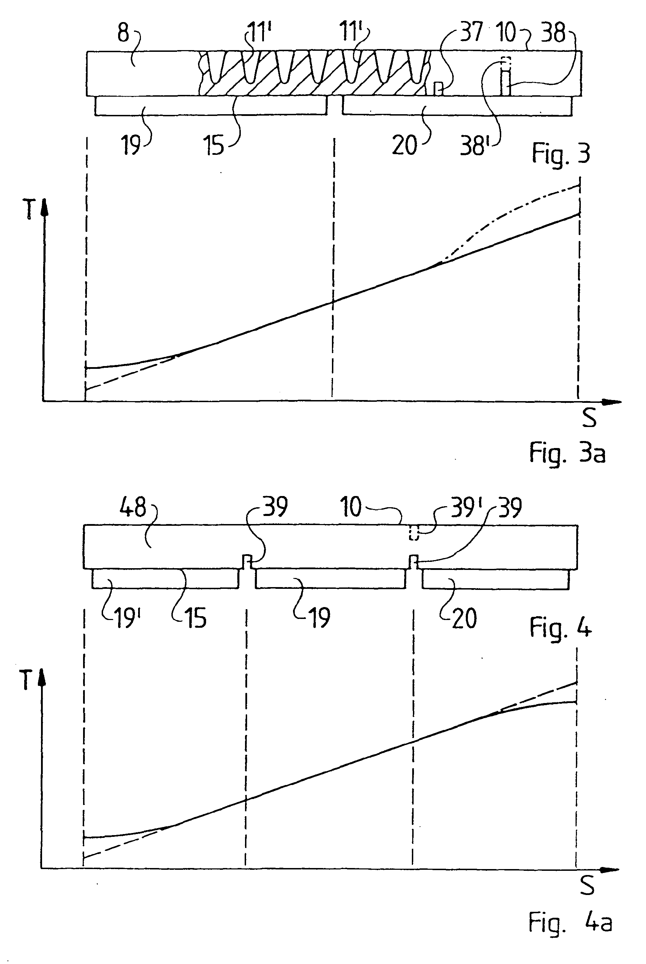

Fig. 3 zeigt den Temperierblock 8 der Figuren 1 und 2 mit seinen beiden Temperiereinrichtungen 19 und 20 in Seitenansicht. Die als Vertiefungen zur Aufnahme der Behälter ausgebildeten Aufnahmen 11' sind hier etwas kleiner und in größerer Zahl dargestellt. Die Aufnahmen 1 1' können in Reihen und Spalten geordnet auf der Aufnahmeseite 10 vorgesehen sein. Sie dienen der Aufnahme einer größeren Zahl von Behältern zu deren Temperierung.

Die Temperiereinrichtungen 19 und 20, die dem Block 8 von der Kontaktierseite 15 her anliegen, können vorzugsweise als Peltierelemente vorgesehen sein mit in Fig. 3 nicht dargestellten Anschlußleitungen zur Strombeaufschlagung. Damit können beliebige Temperaturen heizend oder kühlend eingestellt werden. Die Temperiereinrichtungen 19 und 20 können aber auch beispielsweise als flüssigkeitsdurchströmte Wärmetauscher, die z.B. über Schlauchleitungen versorgt werden, ausgebildet sein.

Die Temperiereinrichtungen 19 und 20 können auf gleiche Temperatur gebracht werden oder auch auf unterschiedliche Temperaturen. Nicht dargestellte Temperaturfühler im Block oberhalb der Temperiereinrichtungen können mit einer die Wärmezu- und -abfuhr durch die Temperiereinrichtungen steuernden Regeleinrichtung verbunden sein.

In der Ausführungsform der Fig. 3 liegen die Temperiereinrichtungen 19 und 20 je etwa der halben Fläche der Kontaktierseite 15 an. Der gute Wärmekontakt kann durch Verklebung, Verschraubung oder sonstige Befestigung gesichert sein.

Werden die Temperiereinrichtungen 19 und 20 auf unterschiedliche Temperatur gebracht, wobei im dargestellten Fall die Temperiereinrichtung 20 auf höherer Temperatur liegt, so ergibt sich ein Temperaturverlauf über die Länge des Temperierblockes 8, der in Fig. 3a dargestellt ist. Die Temperiereinrichtung 20 führt dem Temperierblock 8 laufend Wärme zu, während die Temperiereinrichtung 19 kühlend dem Temperierblock Wärme entzieht. Wärme fließt also durch den Temperierblock 8 zwischen den Temperiereinrichtungen 20 und 19.

Es ergibt sich, wie die Temperaturkurve der Fig. 3a zeigt, in der die Temperatur T über der Strecke S dargestellt ist, im mittleren Bereich des Temperierblockes 8 ein linearer Temperaturverlauf. Zum linken Ende hin, also über der Temperiereinrichtung 19, flacht die Temperaturkurve ab, da zum linken Ende des Temperierblockes 8 hin der heizende Einfluß der Temperiereinrichtung 20 immer mehr abnimmt.

Auf der rechten Seite, also über der Temperiereinrichtung 20, verläuft gemäß Fig. 3a die Temperatur linear bis zum Ende des Temperierblockes. Dafür sorgen zwei parallel zur Grenze zwischen den mit den Temperiereinrichtungen 19 und 20 kontaktierten Feldern der Kontaktierseite 15 verlaufende Nuten 37 und 38. Diese Nuten schwächen den Querschnitt des Temperierblockes 8 und sorgen in Richtung des Wärmestromes, der im Block von der heizenden Temperiereinrichtung 20 zur kühlenden Temperiereinrichtung 19 verläuft, für eine örtliche Erhöhung des Wärmeleitwiderstandes des ansonsten gut leitenden Blockes, der beispielsweise aus Metall besteht. Da die Steilheit des Temperaturgradienten der in Fig. 3a dargestellten Temperaturkurve proportional zum Produkt aus Wärmestrom und Wärmeleitwiderstand ist, kann durch örtliche Veränderung des Wärmeleitwiderstandes die Form der Temperaturkurve beeinflußt und insbesondere, wie die Fig. 3a zeigt, die Kurve linearisiert werden. Vorteilhaft sind dazu die Nuten 37 und 38 unterschiedlich tief, also mit unterschiedlicher Querschnittsschwächung des Blockes, ausgebildet. Die Tiefe und Anordnung der Nuten 37 und 38 in Fig. 3 ist nur beispielsweise. Die genaue Tiefe, Lage und Anzahl der Nuten kann z. B. in Versuchen ermittelt werden.

Figur 3a zeigt, daß auf der linken Seite des Temperierblockes 8 zu seinem Ende hin das Temperaturprofil abflacht. Auf der rechten Seite, also über der Temperiereinrichtung 20 ist diese Abflachung ausgeglichen durch Vorsehen der Nuten 37 und 38. Wie Figur 3 zeigt ist dabei die Nut 38 tiefer ausgebildet als die Nut 37, da sie näher zum rechten Rand des Blockes hin liegt, also in einem Bereich, in dem der Wärmestrom von der Temperiereinrichtung 20 zur Temperiereinrichtung 19 geringer ist als an der Stelle der Nut 37. Um denselben Temperaturgradienten an der Stelle der Nut 38 zu erzeugen, ist ein höherer Wärmeleitwiederstand also eine tiefere Nut erforderlich. Wird die Nut 38 noch weiter vertieft, wie gestrichelt mit 38' angedeutet, so kann das Temperaturprofil in diesem Bereich weiter angehoben werden, wie in Figur 3a strichpunktiert dargestellt.

Fig. 4 zeigt in Darstellung entsprechend Fig. 3 einen Temperierblock 48 mit drei Temperiereinrichtungen 19', 19 und 20. Wird mit der Temperiereinrichtung 20 geheizt und mit der Temperiereinrichtung 19' gekühlt, so ergibt sich die in Fig. 4a dargestellte Temperaturkurve. Zu den Enden der Kurve hin, also über den Temperiereinrichtungen 19' und 20, flacht die Kurve ab, da Nuten über den Temperiereinrichtungen, wie die Nuten 37 und 38 (Fig. 3) fehlen.

Über die mittlere Temperiereinrichtung 19 hinweg ergibt sich ein linearer Temperaturgradient. Die mittlere Temperiereinrichtung 19 kann mit einer mittleren Temperatur betrieben werden oder bedarfsweise auch abgeschaltet sein. Sie wird benötigt, um eine etwaige Abweichung der Temperaturkurve in der Mitte des Blockes zu verhindern und wird insbesondere auch benötigt, wenn die Temperaturkurve insgesamt auf ein anderes Niveau rasch verschoben werden soll. Ferner wird sie benötigt, wenn alternativ der gesamte Block auf dieselbe Temperatur gebracht werden soll.

Für die erforderliche genaue Einstellung der Temperatur im Temperierblock 48 müssen die Temperaturen geregelt werden. Dazu sind die Temperiereinrichtungen 19', 19 und 20 jeweils in.einem eigenen Regelkreis über nicht dargestellte Temperatursensoren gesteuert, die im Block 48 oberhalb der einzelnen Temperiereinrichtungen vorgesehen sind. Zwischen den Regelkreisen findet Wärmeaustausch durch Wärmefluß im Block zwischen den Temperiereinrichtungen statt. Dies führt zu Wechselwirkungen der Regelkreise, wodurch schwer beherrschbare Regelschwingungen entstehen können.

Diese Regelschwingungen lassen sich verringern durch Verringerung des Wärmestromes zwischen den Temperiereinrichtungen. Im Ausführungsbeispiel der Fig. 4 sind dazu den Wärmeleitwiderstand zwischen den Temperiereinrichtungen erhöhende Nuten 39 an den Grenzen zwischen den mit den Temperiereinrichtungen 19', 19 und 20 belegten Feldern der Kontaktierseite 15 vorgesehen.

Wie die Fig. 4 weiter zeigt, können die Nuten 39 auch, wie gestrichelt mit der Nut 39' dargestellt, von oben, also in die Aufnahmeseite 10, eingebracht sein. Auch die Nuten 37 und 38 der Fig. 3 können alternativ von oben, also von der Aufnahmeseite 10 her, in den Block eingebracht sein.

In den Figuren 3 und 4 sind Nuten 37, 38 und 39 dargestellt, die zu unterschiedlichen Zwecken den Wärmestrom durch den Temperierblock behindern sollen, indem sie den Querschnitt des Blockes schwächen und somit an dieser Stelle die Wärmeleitfähigkeit verringern bzw. den Wärmeleitwiderstand erhöhen. An Stelle der dargestellten Nuten können auch andere Möglichkeiten verwendet werden, örtlich die Wärmeleitfähigkeit des Blockes zu verändern. An Stelle der Nuten können auch-auf andere Weise Abschnitte im Temperierblock vorgesehen sein, die eine andere Wärmeleitfähigkeit bzw. einen anderen Wärmeleitwiderstand aufweisen, als die anderen Stellen des Blockes. Solche Abschnitte können z. B. dadurch geschaffen werden, daß der Block an dieser Stelle getrennt ist und eine Zwischenlage aus einem Material höheren Leitwiderstandes eingesetzt ist. Die genannten Abschnitte können ebenso wie die in den Figuren 3 und 4 dargestellten Nuten in beliebiger Linienführung den Block durchlaufen, vorzugweise jedoch quer zum Wärmestrom in gerader Linie zwischen zwei Rändern des Blockes. So laufen vorzugsweise die in den Figuren 3 und 4 dargestellten Nuten quer zum Block 8 bzw. 48, also senkrecht zur Zeichnungsebene durch den gesamten Block.

Der in den Figuren 3 und 4 dargestellte Temperierblock 8 bzw. 48 ist mit zwei Temperiereinrichtungen 19 und 20 oder drei Temperiereinrichtungen 19', 19 und 20 versehen, die sich jeweils über die gesamte Breite des Blockes erstrecken. Ein Temperaturgradient kann in diesem Block also nur, wie die Temperaturkurven der Figuren 3a und 4a zeigen, in Längsrichtung, also in der Zeichnung von links nach rechts, eingestellt werden.

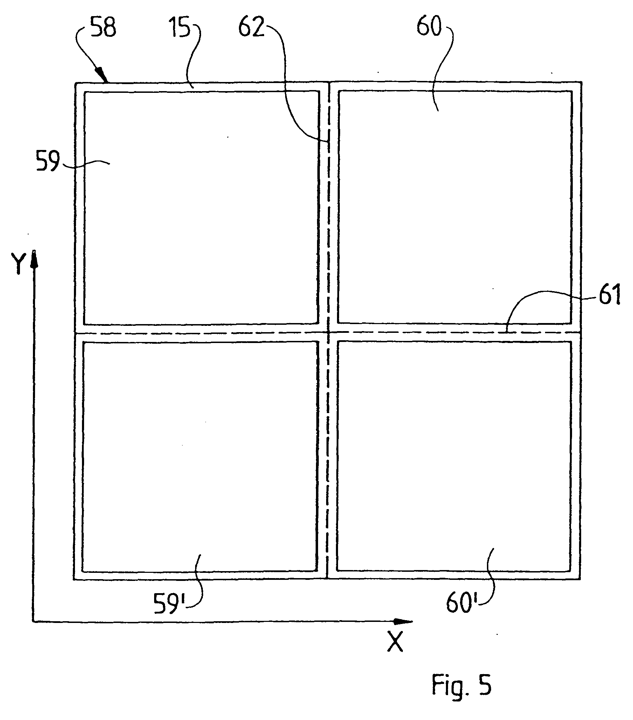

Fig. 5 zeigt eine Variante eines Temperierblockes 58, dessen Kontaktierseite 15 mit Feldgrenzen 61 und 62 in vier Quadrantenfelder mit Temperiereinrichtungen 59, 60, 59' und 60' belegt sind. Werden die Temperiereinrichtungen 59 und 59' gleich betrieben, z.B. kühlend, und auch die Temperiereinrichtungen 60 und 60' auf gleicher Temperatur betrieben, so ergibt sich auf dem Temperierblock 58 ein Temperaturgradient in Richtung der x-Achse. Werden die Temperiereinrichtungen 59 und 60 auf gleicher Temperatur betrieben und auch die Temperiereinrichtungen 59 und 60' auf gleicher Temperatur, so ergibt sich in senkrechter Richtung dazu, also in y-Richtung, ein Temperaturgradient. Werden alle Temperiereinrichtungen mit gleicher Temperatur betrieben, so ergibt sich eine konstante Temperatur über den gesamten Temperierblock 58.

Die Möglichkeit der Erzeugung von Temperaturgradienten abwechselnd in xRichtung oder y-Richtung erlaubt eine Betriebsvariante, bei der der Temperierblock 58 nacheinander auf zwei unterschiedlichen Temperaturniveaus betrieben wird, beispielsweise bei einem Temperaturniveau von 30° und bei einem Temperaturniveau von 60°. Für beide Temperaturniveaus soll die genaue optimale Temperatur ermittelt werden. Das kann in einem Druchlauf erfolgen, wobei zunächst der Temperierblock bei dem Niveau von 30° in x-Richtung mit einem Gradienten betrieben wird der Temperaturen auf dem Temperierblock von beispielsweise 28°, 29°, 30°, 31°, 32° erzeugt. Anschließend wird der Temperierblock auf das Temperaturniveau 60° gebracht mit einem Temperaturgradienten in y-Richtung, wobei dan in y-Richtung unterschiedliche Temperaturen von z. B. 58°, 59°, 60°, 61', 62° erzeugt werden. Ist der Temperierblock dabei über seine Fläche hin in regelmäßigen Zeilen (x-Richtung) und Spalten (y-Richtung) mit zu temperierenden Proben bestückt, so kann man diese anschließend auswerten und feststellen, welche dieser Proben optimal temperiert wurden. Bei diesen lag auf beiden Temperierniveaus die optimale Temperatur vor.

Interessant ist auch eine weitere mögliche Betriebsvariante, bei der gleichzeitig alle vier Temperiereinrichtungen auf unterschiedlichen Temperaturen gehalten werden. Dann läßt sich ein komplexes Temperaturfeld einstellen mit unterschiedlichen Temperaturen sowohl in x-Richtung als auch in y-Richtung. So kann z.B. in x-Richtung ein größerer Temperaturgradient und in y-Richtung ein kleinerer Temperaturgradient eingestellt werden. Sind auf der Aufnahmeseite des Temperierblockes 58 Aufnahmen für Gefäße in Reihen (x-Richtung) und Spalten (y-Richtung) vorgesehen, so können beispielsweise zwischen den Reihen Temperaturunterschiede von 1° und innerhalb der Reihen zwischen den Spalten Temperaturunterschiede von 1110° eingestellt werden. Es lassen sich damit Temperaturunterschiede von beispielsweise 10° mit einer Auflösung von 1/10° einstellen.

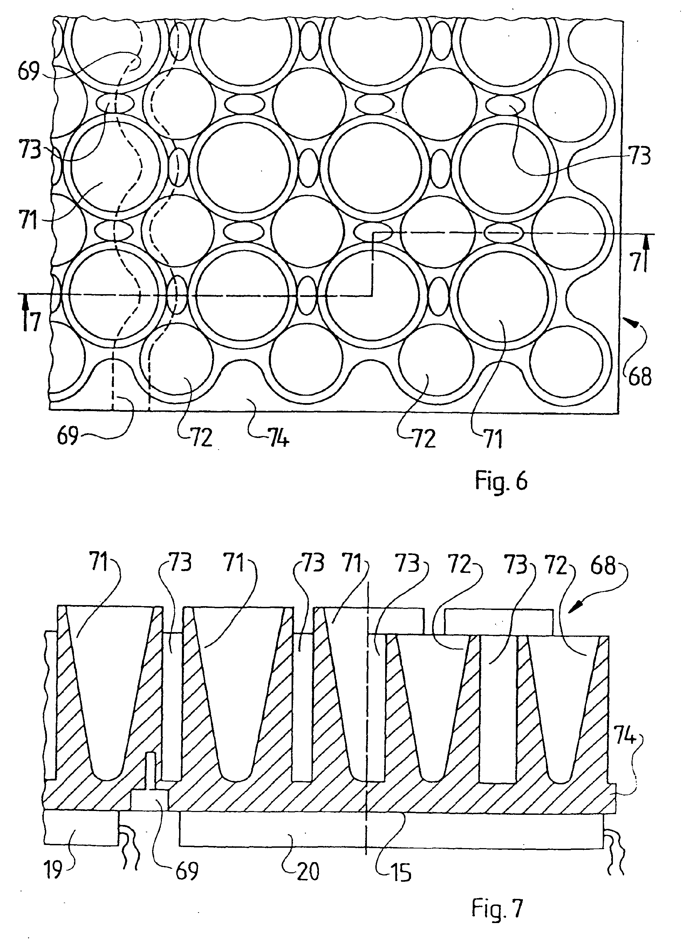

Die Figuren 6 und 7 zeigen in Draufsicht auf die Aufnahmeseite und im Schnitt einen Temperierblock 68, der in seinem grundsätzlichen Aufbau dem bereits erläuterten Temperierblock 8 entspricht, der also mit zwei Temperiereinrichtungen 19 und 20 von seiner Kontaktierseite 15 her kontaktiert ist.

Von der Aufnahmeseite her sind in den Block zwei unterschiedliche Arten von Aufnahmen 71 und 72 als unterschiedlich große Vertiefungen eingebracht.

Wie Fig. 6 zeigt, sind die beiden Arten von Aufnahmen 71 und 72 in einem rechtwinkligen Gitter ineinandergeschachtelt derart angeordnet, daß jeweils zwischen vier Aufnahmen 71 der ersten Art eine Aufnahme 72 der zweiten Art liegt und umgekehrt. Wie Fig. 7 zeigt, entsteht dadurch eine filigrane Blockkonstruktion mit sehr stark geschwächtem Querschnitt im oberen Bereich des Blockes, also zu seiner Aufnahmeseite hin. Zusätzlich sind zwischen den Aufnahmen 71 und 72 noch ovale Löcher 73 eingebracht, die jeweils in der Mitte zwischen zwei größeren Aufnahmen 71 und zwei kleineren Aufnahmen 72 liegen, wie die Fig. 6 zeigt. Dadurch wird der Temperierblock 70 in seinem oberen Bereich zusätzlich geschwächt. Wänneleitung zwischen den Temperiereinrichtungen 20 und 19 findet also weniger in seinem oberen, durch die Aufnahmen 7.1, 72 und die Löcher 73 geschwächten Dickenbereich statt, sondern im Bereich der unteren, durchgehenden Platte 74, die unter allen Aufnahmen 71, 72 und den Löchern 73 durchgehend verläuft.

Wie Figur 6 zeigt, ist bei der dargestellten Konstruktion das Volumen des Temperierblockes 68 insbesondere in seinem oberen, der Kontaktierseite 15 abgewandt liegenden dicken Bereich sehr weitgehend verringert. Dadurch ist die Wärmekapazität des Temperierblockes stark verringert. Dies gibt die Möglichkeit, den Temperierblock sehr schnell auf eine gewünschte Temperatur zu bringen, beispielsweise von einem Temperaturniveau auf ein anderes Temperaturniveau zu heizen oder zu kühlen. Es ergibt sich also für den in Figur 1 oder 2 dargestellten Laborthermostaten die Möglichkeit, in einem der dargestellten Temperierblöcke mehrere Temperaturniveaus nacheinander zu betreiben. So können insbesondere benachbarte Temperaturniveaus in einem Temperierblock betrieben werden, während für ein weiter entferntes Temperaturniveau ein anderer Temperierblock verwendet wird. Bei den üblichen drei Temperaturniveaus für den PCR-Prozesses können z. B. zwei der Temperaturniveaus in einem Block und eines in einem zweitem Block betrieben werden. Hilfreich dabei ist auch die in den Figuren dargestellte großflächige Kontaktierung des Temperierblockes mit den Temperiereinrichtungen, die einer sehr raschen Aufheizung oder Abkühlung dienlich ist.

Die in den Figuren 6 und 7 dargestellte sehr massearme Ausbildung des Temperierblockes 68 sorgt aber nicht nur für eine stark verringerte Wärmekapazität des Temperierblockes, sonderen ergibt auch eine geringe Wärmeleitfähigkeit bzw. einen hohen Wärmeleitwiderstand des Temperierblockes in Richtung des Wärmetransportes zwischen den Temperiereinrichtungen 20 und 19. Zur Erzielung eines gewünschten Temperaturprofiles bzw. eines Temperaturgradienten, wie er beispielsweise in den Figuren 3a und 4a dargestellt ist, wird angesichts des hohen Wärmeleitwiderstandes nur ein geringer Wärmestrom benötigt. Die Temperiereinrichtungen 19 und 20 können daher mit geringer Leistung ausgebildet sein.

Der in den Figuren 6 und 7 dargestellte Temperierblock 68 weist eine Nut 69 auf, die die an Hand der Fig. 4 erläuterte Funktion der thermischen Entkopplung zwischen den Temperiereinrichtungen 20 und 19 erfüllt. Die Nut 69 ist, wie Fig. 7 im Schnitt zeigt, stufenförmig ausgebildet, um möglichst tief zwischen die Aufnahmen 71, 72 und die Löcher 73 reichen zu können, ohne jedoch diese zu berühren. Wie Fig. 6 (gestrichelt) zeigt, ist die Nut 69 zu diesem Zweck mäanderförrnig zwischen den Vertiefungen und Löchern sich hindurchwindend angeordnet. Der dargestellte Temperierblock 68 kann beispielsweise formgegossen oder mit einer numerisch gesteuerten Fräsmaschine hergestellt werden, beispielsweise aus Aluminium.

Ähnlich wie in Figur 4 mit der gestrichelten Nut 39 angedeutet, kann auch bei der Ausführungsform der Figuren 6 und 7 die Nut 69 von der Aufnahmeseite, also in Figur 7 von oben in den Temperierblock 68 eingebracht sein. Sie kann beispielweise quer durch die Vertiefungen 71, 72 und Löcher 73 verlaufen oder auch mäanderförmig diese umlaufend ausgebildet sein, beispielweise als sehr schmaler und tiefer Schlitz.

## Patentansprüche

1. Laborthermostat für PCR-Zwecke, aufweisend einen Temperierblock (8, 48, 58, 68) für Laborthermostaten mit Aufnahmen (11, 11', 71, 72) an einer Aufnahmeseite (10) zur Aufnahme der mit Probeflüssigkeit gefüllten Bereiche von Behältern (1) in großflächigem Kontakt und mit wenigstens zwei den Temperierblock wärmeleitend kontaktierenden Temperiereinrichtungen (20, 19, 19', 59, 59', 60, 60') zur Erzeugung unterschiedlicher Temperaturen an unterschiedlichen Stellen des Temperierblockes, wobei die Temperiereinrichtungen als Peltierelemente ausgebildet sind und, zum Zweck der direkten Temperaturbeeinflussung des Temperierblocks über seine ganze Fläche, mit aneinandergrenzenden Feldern der der Aufnahmeseite gegenüberliegenden Kontaktierseite (15) des Temperierblockes (8, 48, 58, 68) in großflächigem Kontakt stehen, wobei der Laborthermostat zum Betrieb des Temperierblocks in zwei unterschiedlichen Betriebsarten des Temperierblocks derart ausgebildet ist, dass diese Temperiereinrichtungen (20, 19, 19', 59, 59', 60, 60') in einer ersten Betriebsart zur Erzeugung eines Temperaturgradienten über die Temperiereinrichtungen hinweg auf unterschiedlichen Temperaturen betrieben werden, und in einer alternativen Betriebsart zur Erzeugung einer über den gesamten Block gleichmäßigen Temperatur betrieben werden, wobei jeder der Temperiereinrichtungen (20, 19, 19', 59, 59', 60, 60') jeweils mehrere in Gradientenrichtung hintereinander liegende Aufnahmen (11, 11', 71, 72) gegenüberliegen.

2. Laborthermostat nach Anspruch 1, **wobei** der Temperierblock (8, 46, 58, 68) an den Grenzen zwischen den Feldern Abschnitte (39, 39', 69) mit einem Wärmeleitwiderstand aufweist, der von dem sonstigen Wärmeleitwiderstand im Temperierblock abweicht.

3. Laborthermostat nach Anspruch 2, **wobei** die Abschnitte dadurch geschaffen werden, dass der Temperierblock (8, 48, 58, 68) an der entsprechenden Stelle getrennt ist und eine Zwischenlage aus einem Material höheren Leitwiderstandes eingesetzt ist.

4. Laborthermostat nach einem der Ansprüche 2 oder 3, **wobei** der Temperierblock (8, 48, 58, 68) innerhalb eines Feldes parallel beabstandet zu dessen Grenze mit einem unterschiedlich temperierten Nachbarfeld Abschnitte (37, 38) mit einem Wärmeleitwiderstand aufweist, der von dem sonstigen Wärmeleitwiderstand im Temperierblock (8, 48, 58, 68) abweicht.

5. Laborthermostat nach einem der Ansprüche 2 bis 4, **wobei** die Abschnitte (37, 38) von der Mitte des Temperierblocks (8, 48, 58, 68) zu seinem Rand hin anwachsende Wärmeleitwiderstände aufweisen.

6. Laborthermostat nach einem der Ansprüche 2 bis 5, **wobei** die Abschnitte (37, 38) den Querschnitt des Temperierblocks (8, 48, 58, 68) verringernde Nuten aufweisen.

7. Laborthermostat nach Anspruch 1, **wobei** die Kontaktierseite (15) sowohl in Längsals auch in Querrichtung in Felder unterteilt ist, die mit getrennten Temperiereinrichtungen (59, 59', 60, 60') kontaktiert sind.

8. Laborthermostat nach Anspruch 7, **wobei** seitlich benachbarte Temperiereinrichtungen (59, 59', 60, 60') gleich temperierend betreibbar sind, so dass der Temperierblock in Längsrichtung oder Querrichtung einen Temperaturgradienten aufweist.

9. Laborthermostat nach Anspruch 7, **wobei** alle Temperiereinrichtungen (59, 59', 60, 60') auf gleiche oder jeweils auf verschiedene Temperatur bringbar sind.

10. Laborthermostat nach Anspruch 7, **wobei** die Regeleinrichtung zur Steuerung der Temperiereinrichtungen (59, 59', 60, 60') derart ausgebildet ist, dass der Temperierblock nacheinander auf zwei unterschiedliche Temperaturniveaus bringbar ist.

11. Laborthermostat nach Anspruch 10, **wobei** zunächst der Temperierblock auf eine erste Temperatur mit einem Gradienten in einer ersten Richtung und danach der Temperierblock auf eine andere Temperatur mit einem Gradienten senkrecht zum ersten Gradienten bringbar ist.

12. Laborthermostat nach Anspruch 1, **wobei** an der Aufnahmeseite zwei Arten von Aufnahmen (71, 72) als unterschiedlich große Vertiefungen eingebracht sind.

13. Verfahren zur Temperierung einer Mehrzahl von Probeflüssigkeit enthaltenden Behältern (1) unter Verwendung eines Laborthermostaten für PCR-Zwecke, aufweisend einen Temperierblock (8, 48, 58, 68) für Laborthermostaten mit Aufnahmen (11, 11', 71, 72) an einer Aufnahmeseite (10) zur Aufnahme der mit Probeflüssigkeit gefüllten Bereiche von Behältern (1) in großflächigem Kontakt und mit wenigstens zwei den Temperierblock wärmeleitend kontaktierenden Temperiereinrichtungen (20, 19, 19', 59, 59', 60, 60') zur Erzeugung unterschiedlicher Temperaturen an unterschiedlichen Stellen des Temperierblockes, wobei die Temperiereinrichtungen als Peltierelemente ausgebildet sind und, zum Zweck der direkten Temperaturbeeinflussung des Temperierblocks über seine ganze Fläche, mit aneinandergrenzenden Feldern der der Aufnahmeseite gegenüberliegenden, Kontaktierseite (15) des Temperierblockes (8, 48, 58, 68) in großflächigem Kontakt stehen, wobei der Laborthermostat zum Betrieb des Temperierblocks in zwei unterschiedlichen Betriebsarten des Temperierblocks derart ausgebildet ist, dass diese Temperiereinrichtungen (20, 19, 19', 59, 59', 60, 60') in einer ersten Betriebsart zur Erzeugung des Temperaturgradienten über die Temperiereinrichtungen hinweg auf unterschiedlichen Temperaturen betrieben werden, und in einer alternativen Betriebsart zur Erzeugung einer über den gesamten Block gleichmäßigen Temperatur betrieben werden, wobei jeder der Temperiereinrichtungen (20, 19, 19', 59, 59', 60, 60') jeweils mehrere in Gradientenrichtung hintereinander liegende Aufnahmen (11, 11', 71, 72) gegenüberliegen.

## Claims

1. Laboratory thermostat for PCR purposes, having a thermostated block (8, 48, 58, 68) for laboratory thermostats, the thermostated block having wells (11, 11', 71, 72) at a wells side (10) for receiving the portions of vials (1) containing sample liquid by a large-area contact, the thermostated block having at least two heat regulating devices (20, 19, 19', 59, 59', 60, 60'), which contact the thermostated block for the purpose of heat conduction, for generating different temperatures at different positions at the thermostated block, wherein the heat regulating devices are Peltier elements which, for the purpose of direct temperature control of the thermostated block over its entire surface, make contact over a large surface with adjoining zones of the contact side (15), which opposes the wells side of the thermostated block (8, 48, 58, 68), wherein the laboratory thermostat is configured for the operation in two different operation modes of the thermostated block such that, in a first operation mode for generating a temperature gradient above the heat regulating devices, the heat regulating devices (20, 19, 19', 59, 59', 60, 60') can be operated at different temperatures, and, in an alternative operation mode, can be operated for generating a uniform temperature across the entire thermostated block, wherein each of the heat regulating devices (20, 19, 19', 59, 59', 60, 60') is opposed by multiple wells (11, 11', 71, 72) arranged consecutively along the direction of the temperature gradient.

2. Laboratory thermostat according to claim 1, wherein the thermostated block (8, 48, 58, 68) has portions (39, 39', 69) provided at the boundaries of the zones, which portions have a different thermal resistance than the residual thermostated block.

3. Laboratory thermostat according to claim 2, wherein the portions are created by splitting the thermostated block (8, 48, 58, 68) at such a site and inserting an intermediate layer made from a material of higher thermal resistance.

4. Laboratory thermostat according to one of the claims 2 or 3, wherein the thermostated block (8, 48, 58, 68) has portions (37, 38) having a different thermal resistance than the residual thermostated block (8, 48, 58, 68), the portions (37, 38) being provided within a zone in a distance and in parallel to the zone boundary adjoining a differently temperature controlled zone.

5. Laboratory thermostat according to one of the claims 2 to 4, wherein the portions (37, 38) have thermal resistances, which increase from the center of the thermostated block (8, 48, 58, 68) to its edge.

6. Laboratory thermostat according to one of the claims 2 to 5, wherein the portions (37, 38) have grooves, which reduce the cross section of the thermostated block (8, 48, 58, 68).

7. Laboratory thermostat according to claim 1, wherein the contact side (15) is subdivided in the longitudinal- and in the transverse direction in zones, which are contacted by individual heat regulating devices (59, 59', 60, 60').

8. Laboratory thermostat according to claim 7, wherein laterally adjacent heat regulating devices (59, 59', 60, 60') can be operated for a uniform temperature control such that the thermostated block has a temperature gradient in longitudinal direction or in transverse direction.

9. Laboratory thermostat according to claim 7, wherein all heat regulating devices (59, 59', 60, 60') can be operated for achieving a uniform temperature or, respectively, a different temperature.

10. Laboratory thermostat according to claim 7, wherein the temperature control device for controlling the heat regulating devices (59, 59', 60, 60') is configured such that the thermostated block can be successively set to two different temperatures.

11. Laboratory thermostat according to claim 10, wherein, initially, the thermostated block can be set to a first temperature with a temperature gradient in a first direction, and subsequently, the thermostated block can be set to another temperature with a temperature gradient perpendicular to the first direction.

12. Laboratory thermostat according to claim 1, wherein two different types of wells (71, 72) forming differently sized recesses are provided at the wells side.

13. Method for temperature controlling a plurality of vials (1) containing sample liquid by using a laboratory thermostat for PCR purposes, having a thermostated block (8, 48, 58, 68) for laboratory thermostats, the thermostated block having wells (11, 11', 71, 72) at a wells side (10) for receiving the portions of vials (1) containing sample liquid by a large-area contact, the thermostated block having at least two heat regulating devices (20, 19, 19', 59, 59', 60, 60'), which contact the thermostated block for the purpose of heat conduction, for generating different temperatures at different positions at the thermostated block, wherein the heat regulating devices are Peltier elements which, for the purpose of direct temperature control of the thermostated block over its entire surface, make contact over a large surface with adjoining zones of the contact side (15), which opposes the wells side of the thermostated block (8, 48, 58, 68), wherein the laboratory thermostat is configured for the operation in two different operation modes of the thermostated block such that, in a first operation mode for generating a temperature gradient above the heat regulating devices, the heat regulating devices (20, 19, 19', 59, 59', 60, 60') can be operated at different temperatures, and, in an alternative operation mode, can be operated for generating a uniform temperature across the entire thermostated block, wherein each of the heat regulating devices (20, 19, 19', 59, 59', 60, 60') is opposed by multiple wells (11, 11', 71, 72) arranged consecutively along the direction of the temperature gradient.

## Revendications

1. Thermostat de laboratoire pour des buts de PCR, ayant un bloc de régulation de température (8, 48, 58, 68) pour des thermostats de laboratoire, le bloc de régulation de température ayant des logements (11, 11', 71, 72) au niveau d'un côté de réception (10) pour recevoir les parties de flacons (1) contenant le liquide d'échantillon par contact, le bloc de régulation de température ayant au moins deux dispositifs de régulation de température (20, 19, 19', 59, 59', 60, 60'), qui sont en contact thermoconducteur avec le bloc de régulation de température, afin de générer des températures différentes à différentes positions du bloc de régulation de température, dans lequel les dispositifs de régulation de température sont des éléments de Peltier qui, afin de réguler directement la température du bloc de régulation de température sur toute sa surface, établissent le contact sur une grande surface avec des zones attenantes du côté de contact (15), qui est opposé au côté de réception du bloc de régulation de température (8, 48, 58, 68), dans lequel le thermostat de laboratoire est configuré pour fonctionner en deux modes de fonctionnement différents du bloc de régulation de température de sorte que, dans un premier mode de fonctionnement pour générer un gradient de température supérieur aux dispositifs de régulation de température, les dispositifs de régulation de température (20, 19, 19', 59, 59', 60, 60') peuvent être actionnés à différentes températures et, dans un mode de fonctionnement en variante, peuvent être actionnés pour générer une température uniforme sur tout le bloc de régulation de température, dans lequel, du côté opposé à chacun des dispositifs de régulation de température (20, 19, 19', 59, 59', 60, 60'), se trouvent plusieurs logements (11, 11', 71, 72) les uns derrière les autres dans le sens du gradient de température.

2. Thermostat de laboratoire selon la revendication 1, dans lequel le bloc de régulation de température (8, 48, 58, 68) a des parties (39, 39', 69) prévues au niveau des limites des zones, lesquelles parties ont une résistance thermique différente du bloc de régulation de température résiduel.

3. Thermostat de laboratoire selon la revendication 2, dans lequel les parties sont créées en partageant le bloc de régulation de température (8, 48, 58, 68) au niveau de ce site et en insérant une couche intermédiaire réalisée à partir d'un matériau de résistance thermique plus élevée.

4. Thermostat de laboratoire selon l'une des revendications 2 ou 3, dans lequel le bloc de régulation de température (8, 48, 58, 68) a des parties (37, 38) ayant une résistance thermique différente du bloc de régulation de température résiduel (8, 48, 58, 68), les parties (37, 38) étant prévues à l'intérieur d'une zone à une certaine distance de et parallèlement à la limite de zone attenante à une zone contrôlée différemment du point de vue de la température.

5. Thermostat de laboratoire selon l'une des revendications 2 à 4, dans lequel les parties (37, 38) ont des résistances thermiques qui augmentent du centre du bloc de régulation de température (8, 48, 58, 68) jusqu'à son bord.

6. Thermostat de laboratoire selon l'une des revendications 2 à 5, dans lequel les parties (37, 38) ont des rainures qui réduisent la section transversale du bloc de régulation de température (8, 48, 58, 68).

7. Thermostat de laboratoire selon la revendication 1, dans lequel le côté de contact (15) est divisé dans le sens longitudinal et transversal dans des zones qui sont en contact avec les dispositifs de régulation de température (59, 59', 60, 60') individuels.

8. Thermostat de laboratoire selon la revendication 7, dans lequel les dispositifs de régulation de température (59, 59', 60, 60') latéralement adjacents peuvent être actionnés pour un contrôle de température uniforme de sorte que le bloc de régulation de température a un gradient de température dans le sens longitudinal ou dans le sens transversal.

9. Thermostat de laboratoire selon la revendication 7, dans lequel tous les dispositifs de régulation de température (59, 59', 60, 60') peuvent être actionnés pour atteindre une température uniforme ou respectivement, une température différente.

10. Thermostat de laboratoire selon la revendication 7, dans lequel le dispositif de contrôle de température pour contrôler les dispositifs de régulation de température (59, 59', 60, 60') est configuré de sorte que le bloc de régulation de température peut être successivement réglé sur deux températures différentes.

11. Thermostat de laboratoire selon la revendication 10, dans lequel, initialement, le bloc de régulation de température peut être réglé sur une première température avec un gradient de température dans un premier sens et ensuite, le bloc de régulation de température peut être réglé sur une autre température avec un gradient de température perpendiculaire au premier sens.

12. Thermostat de laboratoire selon la revendication 1, dans lequel deux types différents de logements (71, 72) formant des évidements dimensionnés de différentes manières, sont prévus du côté de réception.

13. Procédé pour contrôler la température d'une pluralité de flacons (1) contenant le liquide d'échantillon en utilisant un thermostat de laboratoire pour des buts de PCR, ayant un bloc de régulation de température (8, 48, 58, 68) pour des thermostats de laboratoire, le bloc de régulation de température ayant des logements (11, 11', 71, 72) au niveau d'un côté de réception (10) pour recevoir les parties des flacons (1) contenant le liquide d'échantillon par contact, le bloc de régulation de température ayant au moins deux dispositifs de régulation de température (20, 19, 19', 59, 59', 60, 60'), qui sont en contact thermoconducteur avec le bloc de régulation de température, afin de générer différentes températures à différentes positions au niveau du bloc de régulation de température, dans lequel les dispositifs de régulation de température sont des éléments de Peltier qui, pour le contrôle direct de la température du bloc de régulation de température sur toute sa surface, établissent le contact sur une grande surface avec des zones attenantes du côté de contact (15), qui est opposé au côté de réception du bloc de régulation de température (8, 48, 58, 68), dans lequel le thermostat de laboratoire est configuré pour fonctionner dans deux modes de fonctionnement différents du bloc de régulation de température de sorte que, dans un premier mode de fonctionnement pour générer un gradient de température supérieur aux dispositifs de régulation de température, les dispositifs de régulation de température (20, 19, 19', 59, 59', 60, 60') peuvent être actionnés à différentes températures, et dans un mode de fonctionnement en variante, peuvent être actionnés pour générer une température uniforme sur tout le bloc de régulation de température, dans lequel, du côté opposé à chacun des dispositifs de régulation de température (20, 19, 19', 59, 59', 60, 60'), se trouvent plusieurs logement (11, 11', 71, 72) agencés les uns derrière les autres sans le sens du gradient de température.
